# EUROPÄISCHE PATENTSCHRIFT

(11) **EP 2 935 388 B1**
(45) Veröffentlichungstag und Bekanntmachung des Hinweises auf die Patenterteilung: **22.02.2017**
(21) Anmeldenummer: 13802360.1
(22) Anmeldetag: 09.12.2013
(51) Int. Cl.: C08G 18/66, C08G 18/72, C08G 18/79, C08G 18/20, C08G 18/32, C08G 18/42, C08K 5/3415, C08G 101/00

(54) **HYDROLYSEBESTÄNDIGE POLYURETHANFORMKÖRPER AUS POLYESTERPOLYURETHAN**
HYDROLYSIS-RESISTANT POLYURETHANE MOULDED ARTICLES MADE OF POLYESTER POLYURETHANE
CORPS MOULÉS DE POLYURÉTHANE RÉSISTANT À L'HYDROLYSE EN POLYESTER POLYURÉTHANE

(30) Priorität: 19.12.2012 EP 12198027
(43) Veröffentlichungstag der Anmeldung: 28.10.2015
(73) Patentinhaber: BASF SE, 67056 Ludwigshafen am Rhein (DE)
(72) Erfinder: KAMM, Andre, 49163 Bohmte (DE); ORTALDA, Marco, I-10100 Torino (IT)
(74) Vertreter: BASF IP Association
(86) Internationale Anmeldenummer: PCT/EP2013/075878
(87) Internationale Veröffentlichungsnummer: WO 2014/095438

(56) Entgegenhaltungen:
- EP-A1- 1 471 109
- WO-A1-02/50179
- WO-A1-2007/090755

## Beschreibung

Die vorliegende Erfindung betrifft ein Verfahren zur Herstellung von Polyurethanformkörpern bei dem man (a) organische Polyisocyanate mit (b) Polyol, enthaltend Polyesterole, (c) gegebenenfalls Treibmitteln, (d) Kettenverlängerungsmitteln und/oder Vernetzungsmitteln, (e) Aminkatalysator (enthält ggf. weitere Katalysatoren), (f) Ionische Flüssigkeit, (g) Carbodiimid der allgemeinen Formel Z-N=C=N-Z, wobei Z einen organischen Rest darstellt und das Stickstoffatom der Carbodiimidgruppe -N=C=N- entweder an ein tertiäres Kohlenstoffatom oder an einen Kohlenstoffatom eines aromatischen Systems gebunden ist, das an den der C-N-Bindung benachbarten Ringpositionen im aromatischen System einen über ein sekundäres oder tertiäres Kohlenstoffatom an das aromatische System gebunden organischen Rest trägt und gegebenenfalls (h) sonstigen Hilfsmitteln und/oder Zusatzstoffen, zu einer Reaktionsmischung vermischt, in eine Form gibt und zu einem Polyurethanformkörper ausreagieren lässt, wobei das molare Verhältnis von ionischer Flüssigkeit zu Aminkatalysator 0,1 : 1 bis 3,0 : 1 beträgt. Weiter betrifft die vorliegende Erfindung Polyurethanformkörper, erhältlich nach einem solchen Verfahren sowie die Verwendung dieser Polyurethanformkörper als Schuhsohlen, insbesondere für Sicherheitsschuhe.

Polyesterpolyurethane werden zum Beispiel als kompakte oder geschäumte Elastomere in z.B. Schuhanwendungen verwendet. Dabei weisen die Polyesterpolyurethane gegenüber den Polyetherpolyurethanen bessere mechanische Eigenschaften auf. Ferner zeigen die PESOL-Polyurethane eine verbesserte Quellungsresistenz gegenüber organischen Stoffen wie z.B. iso-Oktan auf. Diese Quellungsresistenz ist eine wichtige Forderung für Anwendung als Sicherheitsschuh und kann durch Polyetherpolyurethan nicht erfüllt werden. Nachteil der Polyesterpolyurethane ist das diese anfällig für Hydrolyse in feucht warmen Umfeld sind.

Üblicherweise werden zur Herstellung von Polyurethanen auf Basis von Polyesterolen Polyesterole eingesetzt, die durch Polykondensation von C4 bis C6 Dicarbonsäuren mit mehrfunktionellen Alkoholen erhalten werden. Diese Polyurethane haben aber den Nachteil, dass diese nur unzureichende Hydrolysestabilität aufweisen. Zur Verbesserung der Hydrolysestabilität von Polyurethanen auf Basis von Polyesterolen werden beispielsweise diese C4 bis C6-Dicarbonsäuren durch hydrophobere Dicarbonsäuren ersetzt. So beschreibt US 2005124711 microcelluläre Polyesterpolyurethane die aus Polyesterolen, die ausgehend von dimeren Fettsäuren erhalten werden.

WO 2004/050735 beschreibt die Verwendung von Polyesterolen auf Basis von einer Kombination einer ortho-Phthalsäure und einer Dicarbonsäure mit 8-12 Kohlenstoffatomen zur Verbesserung der Hydrolysestabilität.

Ein Nachteil dieser Polyester mit verbesserter Hydrolysestabilität ist, dass die eingesetzten Rohstoffe teuer sind. Weiter werden die mechanischen Eigenschaften gegenüber Polyurethanen auf Basis klassischer Polyesterole, die durch Polykondensation von C4 bis C6 Dicarbonsäuren mit mehrfunktionellen Alkoholen erhalten werden, schlechter. Schließlich nimmt bei Ersatz der klassischen Polyesterole durch Lösungen gemäß US 2005124711 oder WO 2004/050735 durch deren geringere Polarität die iso-Oktan Quellung zu, wodurch diese Lösungen nur bedingt zur Herstellung von Sicherheitsschuhen geeignet sind.

In DE 100 63 497 wird ein Verfahren offenbart, bei dem Ester von ein- oder mehrbasigen Carbonsäuren in unterstöchiometrischen Verhältnissen zum eingesetzten Aminkatalysator nutzt um die Hydrolysestabilität zu verbessern. Nachteil des hier offenbarten Verfahrens ist, dass die Verbesserung der Hydrolysestabilität nur von kurzer Dauer ist (etwa 9 Tage bei 70°C und 95% r.H.).

Die Hydrolysestabilität von Polyesterpolyurethanen kann durch die Zugabe von Additiven, wie Carbodiimiden, deutlich verbessert werden. Solche Materialien sind kommerziell unter Handelsnamen wie z.B. Elastostab® oder Stabaxol® erhältlich.

Ebenso ist bekannt, dass der Einsatz von ionischen Flüssigkeiten in Polyesterpolyurethanen die antistatischen Eigenschaften verbessern kann. Dies wird beispielsweise in WO 2007/090755 offenbart. In den Beispielen wird auch Aminkatalysator und Carbodiimid eingesetzt, dabei beträgt das molare Verhältnis ionische Flüssigkeit zu Aminkatalysator 4 : 1.

Aufgabe der vorliegenden Erfindung war es, Polyurethane auf Basis von Polyesterolen zu liefern, die eine verbesserte Hydrolysestabilität und hervorragende mechanische Eigenschaften aufweisen, die sich insbesondere als Sohlenmaterial für Sicherheitsschuhe eignen.

Die erfindungsgemäßen Aufgabe konnte gelöst werden durch einen Polyurethanformkörper, herstellbar nach einem Verfahren, bei dem man (a) organische Polyisocyanate mit (b) Polyol, enthaltend Polyesterole, (c) gegebenenfalls Treibmitteln, (d) Kettenverlängerungsmitteln und/oder Vernetzungsmitteln, (e) Aminkatalysator, (f) Ionische Flüssigkeit, (g) Carbodiimid der allgemeinen Formel Z-N=C=N-Z, wobei Z einen organischen Rest darstellt und das Stickstoffatom der Carbodiimidgruppe -N=C=N- entweder an ein tertiäres Kohlenstoffatom oder an einen Kohlenstoffatom eines aromatischen Systems gebunden ist, das an den der C-N-Bindung benachbarten Ringpositionen im aromatischen System einen über ein sekundäres oder tertiäres Kohlenstoffatom an das aromatische System gebunden organischen Rest trägt und gegebenenfalls (h) sonstigen Hilfsmitteln und/oder Zusatzstoffen, zu einer Reaktionsmischung vermischt, in eine Form gibt und zu einem Polyurethanschaumstoffformkörper ausreagieren lässt, wobei das molare Verhältnis von ionischer Flüssigkeit zu Aminkatalysator 0,1 : 1 bis 3,0 : 1 beträgt.

Insbesondere handelt es sich bei den erfindungsgemäßen Polyurethanformkörpern um Elastomere. Diese umfassen kompakte Polyurethanelastomere, auch als Gießharze bezeichnet, und elastomere Polyurethanschaumstoffe, vorzugsweise Polyurethanintegralschaumstoffe. Unter einem elastomeren Polyurethanschaumstoff sind im Rahmen dieser Erfindung Polyurethanschaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei vorzugsweise über 150 g/L bis 850 g/L bevorzugt von 180 g/L bis 750 g/L, besonders bevorzugt 200 g/L bis 650 g/L. Die Dichte kompakter Polyurethanelastomere liegt bei mehr als 850 g/L bis 1400 g/L, vorzugsweise von 900 bis 1300g/l und insbesondere von 950 bis 1200 g/L.

Die zur Herstellung der erfindungsgemäßen Polyurethanformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind monomeres Metandiphenyldiisocyanat (MMDI), wie 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b) beschriebenen Polyesterole eingesetzt.

Gegebenenfalls werden den genannten Polyesterolen bei der Herstellung der Isocyanatprepolymere übliche Kettenverlängerer oder Vernetzungsmittel zugegeben. Solche Substanzen sind im Folgenden unter f) beschrieben.

Die Polyole (b) enthalten Polyesterole. Als Polyesterole werden Polyesterole mit mindestens zwei gegen Isocyanatgruppen reaktiven Wasserstoffatomen eingesetzt. Vorzugsweise weisen Polyesterole ein zahlenmittleres Molekulargewicht von größer 450 g/mol, besonders bevorzugt von größer 500 bis kleiner 6.000 g/mol und insbesondere von 600 bis 3.500 g/mol auf.

Polyesterpolyole können beispielsweise aus organischen Dicarbonsäuren mit 2 bis 12 Kohlenstoffatomen, vorzugsweise aliphatischen Dicarbonsäuren mit 2 bis 10 Kohlenstoffatomen und besonders bevorzugt 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein zahlenmittleres Molekulargewicht von 480 bis 3000, vorzugsweise 1000 bis 3000 g/mol.

Als Polyesterole eignen sich ferner polymermodifizierte Polyesterole, vorzugsweise Pfropf-Polyesterole. Hierbei handelt es sich um ein sogenanntes Polymerpolyesterol, welches üblicherweise einen Gehalt an, bevorzugt thermoplastischen, Polymeren von 5 bis 60 Gew.-%, bevorzugt 10 bis 55 Gew.-%, besonders bevorzugt 15 bis 50 Gew.-% und insbesondere 20 bis 40 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyesterol enthält neben dem Pfropfcopolymerisaten überwiegend die Homopolymere der Olefine, dispergiert in unverändertem Polyesterol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist Polymerpolyol enthalten, liegt dies vorzugsweise zusammen mit weiteren Polyesterolen vor. Besonders bevorzugt ist der Anteil an Polymerpolyol größer als 5 Gew.-%, bezogen auf das Gesamtgewicht der Komponente (b). Die Polymerpolyesterole können beispielsweise, bezogen auf das Gesamtgewicht der Komponente (b), in einer Menge von 7 bis 90 Gew.-%, oder von 11 bis 80 Gew.-% enthalten sein.

Neben Polyesterolen können auch weitere Polyole mit einem zahlenmittleren Molekulargewicht von größer 500 g/mol, beispielsweise Polyetherole als Polyole (b) eingesetzt werden. Dabei beträgt aber der Anteil der weiteren Polyole vorzugsweise weniger als 40 Gew.-%, besonders bevorzugt weniger als 20 Gew.-%, ganz besonders bevorzugt weniger als 10 Gew.-% und insbesondere 0 Gew.-%, bezogen auf das Gesamtgewicht an Polyesterolen und den weiteren Polyolen.

Ferner sind bei der Herstellung von Polyurethanschaumstoffformkörpern Treibmittel c) zugegen. Diese Treibmittel c) können Wasser enthalten. Als Treibmittel c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%,, bezogen auf das Gesamtgewicht der Komponenten a) bis h).

In einer weiteren bevorzugten Ausführungsform werden der Umsetzung der Komponenten a) bis h) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im Allgemeinen in einer Menge von 0,5 bis 5 Gew.-%, bezogen auf das Gesamtgewicht der Komponenten b), c) und d) zugesetzt.

Als Kettenverlängerungsmittel und/oder Vernetzungsmittel d) werden Substanzen mit einem Molekulargewicht von vorzugsweise kleiner 450 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol, Diethylengylcol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten b) und d), zum Einsatz.

Als Katalysatoren zur Herstellung der Polyurethanschaumstoffe werden bevorzugt Verbindungen verwendet, welche die Reaktion der Polyole (b) und gegebenenfalls Kettenverlängerungs- und Vernetzungsmittel (d) mit den organischen, gegebenenfalls modifizierten Polyisocyanaten (a) stark beschleunigen. Diese enthalten Aminkatalysatoren. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-oktan und vorzugsweise 1,4-Diaza-bicyclo-(2,2,2)-oktan und Alkanolaminverbindungen, wie Triethanolamin, Triisopropanolamin, N-Methyl- und N-Ethyl-diethanolamin und Dimethylethanolamin. Vorzugsweise werden als Aminkatalysatoren Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Azabicyclo-(3,3,0)-octan, 1,4-Diaza-bicyclo-(2,2,2)-octan (auch als Triethylendiamin bezeichnet), 1,8-Diazabicyclo[5.4.0]undec-7-en (DBU) und Mischungen daraus eingesetzt. Insbesondere wird als Aminkatalysator 1,4-Diaza-bicyclo-(2,2,2)-oktan eingesetzt.

Neben Aminkatalysatoren können auch weitere, katalytisch wirkende Verbindungen, wie organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon als Katalysatoren eingesetzt werden. Vorzugsweise werden ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente b).

Als ionische Flüssigkeiten (f) können alle in WO 2007/090755 beschriebenen ionischen Flüssigkeiten, einzeln oder in beliebigen Mischungen, eingesetzt werden. Vorzugsweise weisen ionische Flüssigkeiten im Sinn der Erfindung Kationen auf Basis von aromatischen Heterocyclen wie Pyridinium, Pyridazinium, Pyrimidinium, Pyrazinium, Imidazolium, Pyrazolium, Pyrazolinium, Imidazolium, Thiazolium, Oxazolium, Pyrrolidinium und Imidazolidinium auf. Besonders bevorzugt weisen erfindungsgemäße ionische Flüssigkeiten Kationen auf, ausgewählt aus der Gruppe, enthaltend 1,2,3-Trimethylimidazolium, 1,3,4,5-Tetramethylimidazolium, 1,3,4-Dimethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium, 1,2-Dimethylpyridinium, Guanidinium, Hexamethylguanidinium, N,N,N',N'-Tetramethyl-N"-ethylguanidinium, N-Pentamethyl-N-isopropylguanidinium, N-Pentamethyl-N-propylguanidinium, Benzyltriphenylphosphonium, Tetrabutylphosphonium, Trihexyl(tetradecyl)phosphonium und Tri-iso-butyl(methyl)phosphonium.

Typische Anionen ionischer Flüssigkeiten sind Acetat, Bis(2,4,4-trimethylpentyl)phosphinat, Bis(malonato)borat, Bis(oxalato)borat, Bis(pentafluoroethyl)phosphinat, Bis(phtalato)borat, Bis(salicylato)borat, Bis(trifluoromethansulfonyl)imidat, Bis(trifluoromethyl)imidat, Borat, Bromid, Bromoaluminate, Carbonat, Chloroaluminate, Decylbenzolsulfonat, Dichlorocuprat, Dicyanamid, Didecylbenzolsulfonat, Didodecylbenzolsulfonat, Diethylphosphat, Dihydrogenphosphat, Dodecylbenzolsulfonat, Ethylsulfat, Ethylsulfonat, Fluorid, Hexafluorophosphat, Hydrogencarbonat, Hydrogenphosphat, Hydrogensulfat, Hydrogensulfit, Iodid, Methylsulfat, Methylsulfonat, Nitrat, Nitrit, Phosphat, Sulfit, Tetracyanoborat, Tetrafluoroborat, Tetrakis(hydrogensulfato)borat, Tetrakis(methylsulfonato)borat, Thiocyanat, Tosylat, Trichlorozinkat, Trifluoroacetat, Trifluoromethylsulfonat, Tris(heptafluoropropyl)trifluorophosphat, Tris(nonafluorobutyl)trifluorophosphat, Tris(pentafluoroethyl)trifluorophosphat, Tris(pentafluoroethylsulfonyl)trifluorophosphat.

Besonders bevorzugte Anionen sind Hexafluorphosphat, Tetrafluorborat, Thiocyanat und Dicyanamid, Ethylsulfat, Diethylphosphat, Methylsulfat, Bromid, Jodid, p-Toluolsulfonat und Methansulfonat, insbesondere auf Basis von Ethylsulfat, Thiocyanat oder Dicyanamid.

Besonders bevorzugt werden als Ionische Flüssigkeiten im Sinn der Erfindung 1-Ethyl-3-methylimidazoliumchlorid, 1- Butyl-3-methylimidazoliumchlorid, 1-Ethyl-3-methylimidazoliummethylsulfonat, 1-Butyl-3-methylimidazoliummethylsulfonat, 1-Ethyl-3-methylimidazoliumethylsulfat, 1- Butyl-3-methylimidazoliummethylsulfat, 1- Ethyl-3-methylimidazoliumdiethylphosphat, 1-Ethyl-3-methylimidazoliumdicyanamid, 1-Ethyl-3-methylimidazoliumacetat, 1-Butyl-3-methylimidazoliumacetat, 1-Ethyl-3-methylimidazoliumthiocyanat, 1- Butyl-3-methylimidazoliumthiocyanat, 1-Ethyl-3-methylimidazoliumtetrafluoroborat, 1-Butyl-3-methylimidazoliumtetrafluoroborat, 1-Ethyl-3-methylimidazoliumtrifluormethansulfonat, 1-Butyl-3-methylimidazoliumtrifluormethansulfonat, 1-Ethyl-3-methylimidazoliumbis(trifluormethansulfonyl)imid, 1-Butyl-3-methylimidazoliumbis(trifluormethansulfonyl)imid, 1-Ethyl-3-methylimidazoliumhexafluorophosphat, 1-Ethyl-3-methylimidazoliumbromid, 1-Ethyl-3-methylimidazolium-,o-toluolsulfonat sowie, 1- Butyl-3-methylimidazoliumdicyanamid, 1- Butyl-3-methylimidazoliumdimethylphosphat, 1- Butyl-3-methylimidazoliumbromid, 1- Butyl-3-methylimidazolium-*p*-toluolsulfonat, und 1-Butyl-3-methylimidazoliumhexafluorophosphat verwendet.

Weiter bevorzugt werden als Ionische Flüssigkeiten im Sinn der Erfindung 1-Ethyl-3-methylimidazoliummethylsulfonat, 1-Ethyl-3-methylimidazoliumethylsulfat, 1-Ethyl-3-methylimidazoliumdicyanamid, 1-Ethyl-3-methylimidazoliumthiocyanat, 1-Ethyl-3-methylimidazoliumtetrafluoroborat verwendet.

Ganz besonders bevorzugt werden als Ionische Flüssigkeiten im Sinn der Erfindung 1-Ethyl-3-methylimidazoliumethylsulfat, 1-Ethyl-3-methylimidazoliumdicyanamid, 1-Ethyl-3-methylimidazoliumthiocyanat, verwendet. Insbesondere werden als ionische Flüssigkeiten 1-Ethyl-3-methylimidazoliumethylsulfat oder 1-Ethyl-3-methylimidazoliumdicyanamid verwendet.

Die ionische Flüssigkeit (f) wird vorzugsweise in einer Menge von 0,1 bis 5,0 Gew.-%, vorzugsweise 0,3 bis 3,5 Gew.-% und insbesondere von 0,4 bis 3,0 Gew.-%, bezogen auf das Gesamtgewicht der Komponenten (b) bis (h), eingesetzt. Dabei ist es erfindungswesentlich, dass das molare Verhältnis von ionischer Flüssigkeit (f) zu Aminkatalysator (e) 0,1 : 1 bis 3,0 : 1, vorzugsweise 0,25 : 1 bis 2,5 : 1 und besonders bevorzugt 0,5 : 1 bis 2,0 : 1 beträgt.

Als Carbodiimid (g) wird eine Verbindung der allgemeinen Formel Z-N=C=N-Z eingesetzt, wobei Z einen organischen Rest darstellt und das Stickstoffatom der Carbodiimidgruppe -N=C=N-entweder an ein tertiäres Kohlenstoffatom oder an einen Kohlenstoffatom eines aromatischen Systems gebunden ist, das an den der C-N-Bindung benachbarten Ringpositionen im aromatischen System einen über ein sekundäres oder tertiäres Kohlenstoffatom an das aromatische System gebunden Rest trägt. Beispiele für geeignete Reste Z sind tert.-Butylgruppen, Isopropylgruppen und mit sterisch anspruchsvollen Gruppen substituierte Arylgruppen.

Es hat sich als vorteilhaft erwiesen, wenn als sterisch anspruchsvolle Gruppe eine Phenylgruppe verwendet wird, die durch 2,6-ständige Substituenten substituiert ist, wobei es sich bei den Substituenten wiederum um sterisch anspruchsvolle Gruppen, wie beispielsweise tert.-Butyl-gruppen oder bevorzugt Isopropylgruppen handelt.

In einer bevorzugten Ausführungsform wird als sterisch gehindertes Carbodiimid (b) eine Verbindung gemäß der allgemeinen Formel (1) verwendet, 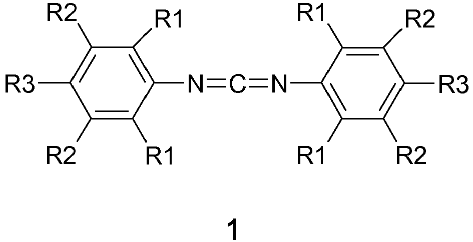 in der R1 eine Isopropyl- oder Isobutylgruppe oder ein Gemisch daraus darstellt und R2 bis R3 ein Wasserstoffatom oder einen organischen Rest darstellt.

In Formel 1 ist R2 bevorzugt ein Wasserstoffatom.

In Formel 1 ist R3 bevorzugt ein Wasserstoffatom oder ein 1-Methyl-1-Phenyl-ethyl-, ein Phenoxy- oder ein tert.-Butylrest.

Besonders bevorzugt ist in Formel 1 R1 ein Isopropylrest.

In einer bevorzugten Ausführungsform wird als sterisch gehindertes Carbodiimid (b) eine Verbindung gemäß der allgemeinen Formel (2) verwendet, 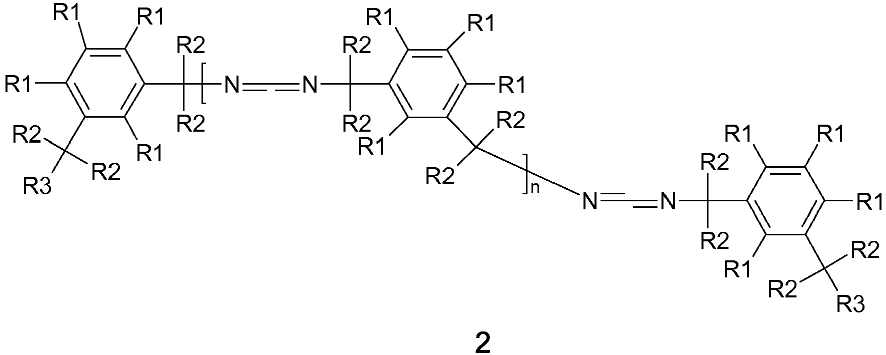
in der R1 gleich oder verschieden ist und einen organischer Rest, bevorzugt ein Wasserstoffatom bedeutet,
R2 gleich oder verschieden ist und einen Alkylrest, bevorzugt eine Methylgruppe bedeutet, und R3 gleich oder verschieden und ein Wasserstoffatom, ein Alkylrest oder ausgewählt aus der Gruppe der-NCO, -NHCONHR⁴, -NHCONR⁴R⁵ und -NHCOOR⁶-Reste ist, wobei R⁴ und R⁵ gleich oder verschieden sind und einen Alkyl- Cycloalkyl- oder Aralkylrest bedeuten und R⁶ gleich R⁴ oder ein Alkoxypolyoxalkylenrest ist und
n eine ganze Zahl von 0 bis 10 ist.

Handelsübliche Uretonimin- oder Carbodiimidmodifizierten Polyisocyanate, wie sie beispielsweise unter den Handelsnamen Lupranat^{®} MM103 erhältlich sind, fallen im Rahmen dieser Erfindung nicht unter die oben definierten Verbindungen der allgemeinen Formel Z-N=C=N-Z.

Solche Carbodiimide werden beispielsweise zur Verbesserung der Hydrolyseeigenschaften eingesetzt. Solche Carbodiimide sind bekannt und kommerziell erhältlich unter den Handelsnamen Elastostab H01 oder Stabaxol I.

Der Reaktionsmischung zur Herstellung der Polyurethanschäume können gegebenenfalls auch noch Hilfsmittel und/oder Zusatzstoffe (h) zugegeben werden. Genannt seien beispielsweise Trennmittel, Füllstoffe, Farbstoffe, Pigmente, Hydrolyseschutzmittel, geruchsabsorbierende Substanzen und fungistatische und/oder bakteriostatisch wirkende Substanzen.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten a) bis (h), zugegeben.

Als Hydrolyseschutzmittel können übliche Hydrolyseschutzmittel, wie Epoxide und Oxazolidine eingesetzt werden.

In dem erfindungsgemäßen Verfahren werden die Ausgangskomponente (a) bis (h) in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt. Dabei entspricht ein Verhältnis von 1 : 1 einem Isocyanatindex von 100. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden.

Zur Herstellung der erfindungsgemäßen Polyurethangießharze werden die Komponenten des Polyurethangießharzsystems, vorzugsweise bei Temperaturen von 30 bis 90 °C besonders bevorzugt 40 bis 80 °C, mehr bevorzugt 45 bis 70 °C und insbesondere bei 50 bis 60 °C vermischt. Diese Mischung wird dann, vorzugsweise in einer Form, zum Polyurethangießharz ausgehärtet. Die Formtemperaturen betragen üblicherweise 0 bis 130 °C, bevorzugt 60 bis 120 °C und besonders bevorzugt bei 80 bis 110 °C. Üblicherweise erfolgt das Vermischen der Komponenten in Niederdruckmaschinen. Die fertigen Polyurethangießharze können zur weiteren Verbesserung der mechanischen Eigenschaften nach dem Entformen bei erhöhten Temperaturen, beispielsweise 50 bis 120 °C, vorzugsweise 60 bis 110 °C und insbesondere 80 bis 100 °C und einen Zeitraum von üblicherweise 10 bis 24 Stunden nachgetempert werden. Dabei enthält die Reaktionsmischung zur Herstellung der Polyurethangießharze im Wesentlichen kein Treibmittel (c). "Im Wesentlichen kein Treibmittel" bedeutet, dass kein extra Treibmittel zugesetzt wird. Gegebenenfalls kann aber beispielsweise das Polyol herstellungsbedingt geringe Mengen an Wasser enthalten. Vorzugsweise enthalten die Verbindungen mit gegenüber Isocyanat reaktiven Gruppen Trockenmittel, beispielsweise Zeolithe, um die Anreicherung von Wasser in den Komponenten und damit ein Aufschäumen der Polyurethane zu vermeiden.

Die erfindungsgemäßen Polyurethangießharze werden vorzugsweise als technische Teile in industriellen oder landwirtschaftlichen Anwendungen wie z.B. Rollen oder Walzen oder als technische Teile im Bergbau wie z.B. Siebe eingesetzt.

Die erfindungsgemäßen Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoff-handbuch", Band 7, Polyurethane, 3. Auflage, 1993, Kapitel 7.

Die Ausgangskomponenten (a) bis (h) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten a) bis h) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper, insbesondere Integralschaumstoff eine Dichte von vorzugsweise 150 g/L bis 850 g/L bevorzugt von 180 g/L bis 750 g/L, besonders bevorzugt 200 g/L bis 700 g/L und insbesondere 200 bis 650 g/L aufweisen. Die Verdichtungsgrade zur Herstellung der erfindungsgemäßen Polyurethanintegralschaumstoffe liegen im Bereich von 1,1 bis 8,5, vorzugsweise von 1,6 bis 7,0.

Die erfindungsgemäßen Polyurethanschaumstoffformkörper werden vorzugsweise als Schuhsohle und besonders bevorzugt als (Zwischen-)Sohle, zum Beispiel für Straßenschuhe, Sportschuhe, Sandalen und Stiefel eingesetzt. Weiter können erfindungsgemäße Polyurethanschaumstoffe im Innenbereich von Verkehrsmitteln beispielsweise in Autos als Lenkräder, Kopfstützen oder Schaltknöpfe oder als Stuhlarmlehnen verwendet. Weitere Verwendungsmöglichkeiten sind als Armlehne für Stühle oder als Motorradsitze. Polyurethangießharze können beispielsweise als Außenschuhsohlen oder als Dichtungen eingesetzt werden. Insbesondere wird der erfindungsgemäße Polyurethanformkörper als Schuhsohle, vorzugsweise für Sicherheitsschuhe eingesetzt. Dabei kann es sich um kompakte Sohlen wie um geschäumte Sohlen handeln, insbesondere um Polyurethanintegralschaumstoffe.

Im Folgenden soll die Erfindung anhand von Beispielen verdeutlicht werden:
Verwendete Einsatzstoffe:
   - Polyol 1:: Polyesterpolyol auf Basis von Adipinsäure, Diethylenglycol und Monoethylenglycol mit einer OH-Zahl von 56 mg KOH/g
   - Polyol 2:: Polyesterol auf Basis von Adipinsäure, 1,4 Butandiol und Monoethylenglycol mit einer OH-Zahl von 56 mg KOH/g
   - Kat:: Triethylendiamine 33%ig gelöst in Monoethylengylcol (Lupragen® N203)
   - KV:: Monoethylenglycol
   - Stabi 1:: Zellstabilisator Dabco DC 193 der Firma Air Products
   - Stabi 2:: Zellstabilisator Tegostab B 8443
   - HS:: Elastostab H01® der Firma BASF Polyurethanes GmbH, Carbodiimid entsprechend der allgemeinen Formel 2
   - IL:: 1-Ethyl-3-methylimidazol ethylsulfat
   - ISO:: ISO 187/3 der Firma BASF Polyurethanes GmbH; Isocyanatprepolymer auf Basis von 4,4'-MDI, Carbodiimidmodifiziertem MDI und Polyesterpolyolen mit einen NCO-Gehalt von 16,2%
   - FRD:: Free Rise Density; Dichte des Schaumstoffs bei freier Expansion
   - FTD:: Formteildichte

Die Formulierungen Vergleichsbeispiele bzw. die erfindungsgemäßen Beispiele wurden gemäß den folgenden Tabellen hergestellt. Die Verarbeitung für die geschäumten Polyurethaneformkörper erfolgte auf einer Niederdruckmaschine EMB F20, wobei die Temperatur der Polyolmischung und des Isocyanats etwa 45°C betrug. Die Kompakten Materialien wurden mittels einer Niederdruckmaschine der Firma DESMA verarbeitet.

Das optimale Mischungsverhältnis zwischen Polyol und Isocyanatkomponente wurde mittels eines Penetrationstestes ermittelt, welcher in der Schuhindustrie zum Stand der Technik gehört. Nachdem das optimale Mischungsverhältnis ermittelt wurde, wurde eine entsprechende Masse an Material in eine Form gegeben um Prüfplatten herzustellen.

Die Materialien wurden mindesten 2 Tage unter Normklima konditioniert bevor die mechanische Charakterisierung erfolgte. Dabei wurde die Zugfestigkeit gemessen nach DIN 53504. Zur Bestimmung der Hydrolyseeigenschaften wurden die Probekörper, hergestellt gemäß DIN 53504, bei 70°C und 95% relativer Luftfeuchte gelagert und die Zugfestigkeit der Probe nach 7, 14 und 21 Tagen Hydrolysealterung gemessen (ZF 7d HL; ZF 14 d HL und ZF21 d HL).

| | V1 | V2 | V3 | V4 | V5 | V6 | V7 | V8 | B1 |
|---|---|---|---|---|---|---|---|---|---|
| Polyol 1 | 90,000 | 89,109 | 89,374 | 88,750 | 88,123 | 86,250 | 85,000 | 84,158 | 87,871 |
| KV | 7,500 | 7,426 | 7,500 | 7,500 | 7,500 | 7,500 | 7,500 | 7,426 | 7,426 |
| Kat | 1,800 | 1,782 | 1,800 | 1,800 | 1,800 | 1,800 | 1,800 | 1,782 | 1,782 |
| IL | 0,000 | 0,000 | 0,625 | 1,250 | 1,877 | 3,750 | 5,000 | 4,950 | 1,238 |
| Stabi 1 | 0,250 | 0,248 | 0,250 | 0,250 | 0,250 | 0,250 | 0,250 | 0,248 | 0,248 |
| HS | 0,000 | 0,990 | 0,000 | 0,000 | 0,000 | 0,000 | 0,000 | 0,990 | 0,990 |
| Wasser | 0,450 | 0,446 | 0,450 | 0,450 | 0,450 | 0,450 | 0,450 | 0,446 | 0,446 |
| Molares Verhältnis IL:Kat | 0 | 0 | 0,5:1 | 1:1 | 1,5:1 | 3:1 | 4:1 | 4:1 | 1:1 |
| ISO | 187/3 | 187/3 | 187/3 | 187/3 | 187/3 | 187/3 | 187/3 | 187/3 | 187/3 |

| | V1 | V2 | V3 | V4 | V5 | V6 | V7 | V8 | B1 |
|---|---|---|---|---|---|---|---|---|---|
| Optimum (Index) | 93 | 96 | 97 | 96 | 93 | 97 | 96 | 95 | 96 |
| Startzeit [s] | 6 | 6 | 5 | 5 | 5 | 5 | 5 | 5 | 6 |
| FRD [g/L] | 297 | 281 | 286 | 286 | 283 | 278 | 275 | 281 | 286 |
| FTD [g/L] | 550 | 550 | 550 | 550 | 550 | 550 | 550 | 550 | 550 |
| Härte [Shore A] | 47 | 49 | 47 | 45 | 40 | 40 | 41 | 40 | 47 |
| Zugfestigkeit [N/mm²] | 6,0 | 6,6 | 6,0 | 6,9 | 5,9 | 6,0 | 6,2 | 6,7 | 6,5 |
| Dehnung[%] | 411 | 423 | 403 | 428 | 424 | 419 | 413 | 422 | 453 |
| ZF 7d HL [N/mm²] | 7,2 | 7,6 | 6,9 | 6,7 | 6,8 | 6,3 | 6,8 | 7,5 | 7,8 |
| (%initial) | (120) | (115) | (115) | (97) | (115) | (105) | (110) | (112) | (120) |
| ZF 14d HL | 3,0 | 4,9 | 2,5 | 2,9 | 3,1 | 3,1 | 2,8 | 5,0 | 6,3 |
| [N/mm²] (%initial) | (50) | (74) | (41) | (42) | (52) | (52) | (45) | (75) | (97) |
| ZF 21 d HL | 0,6 | 1,4 | 0,6 | 0,8 | 0,7 | 0,5 | 0,6 | 1,3 | 2,9 |
| [N/mm²] (%initial) | (10) | (20) | (10) | (12) | (12) | (8) | (10) | (19) | (45) |

Wie aus den Vergleichsbeispielen V1, V3 bis V7 ersichtlich ist, führt eine Variation des molaren Verhältnisses von Aminkatalysator zu Ionischer Flüssigkeit zu keiner Verbesserung der Hydrolyseeigenschaften. Aus den Beispielen V2 und V8 ist ersichtlich, dass der Einsatz eines Carbodiimidhydrolyseschutzmittels (Elastostab® H01) zu einer Verbesserung der Hydrolyseeigenschaften führt. Überraschenderweise wurde in B1 gefunden, dass ein spezifisches molares Verhältnis von Aminkatalysator zu ionischer Flüssigkeit in Kombination mit einem Hydrolyseschutzmittel auf Basis eines Carbodiimids zu deutlich verbesserten Hydrolysestabilitäten führen.

Der Effekt des molaren Verhältnisses von Ionischer Flüssigkeit zu Aminkatalysator soll in den nachfolgenden Beispielen verdeutlicht werden. Die Verarbeitung erfolgte Analog den o.a. Versuchen.

| | V9 | B2 | B3 | B4 | B5 |
|---|---|---|---|---|---|
| Polyol 2 | 91,060 | 90,610 | 90,210 | 89,310 | 88,260 |
| KV | 5,750 | 5,750 | 5,750 | 5,750 | 5,750 |
| Kat | 2,100 | 2,100 | 2,100 | 2,100 | 2,100 |
| IL | 0,000 | 0,450 | 0,850 | 1,750 | 2,800 |
| Stabi 2 | 0,300 | 0,300 | 0,300 | 0,300 | 0,300 |
| HS | 0,500 | 0,500 | 0,500 | 0,500 | 0,500 |
| Wasser | 0,290 | 0,290 | 0,290 | 0,290 | 0,290 |
| Molares Verhältnis IL:Kat | 0 | 0,31:1 | 0,58:1 | 1,20:1 | 1,92:1 |
| ISO | 187/3 | 187/3 | 187/3 | 187/3 | 187/3 |

| | V9 | B2 | B3 | B4 | B5 |
|---|---|---|---|---|---|
| Optimum (Index) | 99 | 98 | 99 | 98 | 99 |
| Startzeit [s] | 8 | 8 | 7 | 7 | 7 |
| FRD [g/L] | 445 | 418 | 405 | 392 | 391 |
| FTD [g/L] | 600 | 600 | 600 | 600 | 600 |
| Härte [Shore A] | 52 | 48 | 47 | 47 | 45 |
| Zugfestigkeit [N/mm²] | 8,1 | 8,2 | 7,9 | 7,7 | 7,7 |
| Dehnung[%] | 446 | 458 | 454 | 461 | 456 |
| ZF 7d HL [N/mm²] | 9,0 | 9,1 | 9,0 | 9,1 | 9,3 |
| (%initial) | (111) | (111) | (114) | (118) | (121) |
| ZF 14d HL | 6,1 | 6,7 | 8,1 | 8,2 | 7,1 |
| [N/mm²] (%initial) | (76) | (82) | (103) | (106) | (92) |

Die Beispiele V9 und B2 bis B5 zeigen, dass die Hydrolysestabilität insbesondere bei einem molaren Verhältnis Ionischer Flüssigkeit zu Aminkatalysator von etwa 1 : 1 ein Maximum aufweist. Ferner offenbaren die Beispiele, dass die Variation des molaren Verhältnisses von ionischer Flüssigkeit zu Aminkatalysator im Bereich von 0,1 : 1 bis 3,0 : 1 zu einer Verbesserung der Hydrolysestabilität führt. Der Effekt ist nicht nur bei geschäumten sondern auch bei kompakten Elastomeren zu beobachten. Dies soll in den folgenden Beispielen verdeutlicht werden. Dabei entspricht die angegebenen Menge an Wasser der in der Polyolkomponente herstellungsbedingt enthaltenen Menge an Wasser von ca. 0,048 Gewichtsteilen Wasser, bezogen auf das Gesamtgewicht an Polyol, Kettenverlängerer, Katalysator, ionischer Flüssigkeit und Hydrolysestabilisator:

| | V10 | B6 | B7 | B8 |
|---|---|---|---|---|
| Polyol 2 | 94,943 | 94,540 | 94,140 | 93,744 |
| KV | 2,624 | 2,612 | 2,599 | 2,587 |
| Kat | 1,908 | 1,899 | 1,890 | 1,881 |
| IL | 0,000 | 0,428 | 0,851 | 1,270 |
| HS | 0,477 | 0,475 | 0,473 | 0,470 |
| Wasser | 0,048 | 0,047 | 0,047 | 0,047 |
| Molares Verhältnis IL:Kat | 0 | 0,32:1 | 0,65:1 | 0,97:1 |
| ISO | 187/3 | 187/3 | 187/3 | 187/3 |

| | V10 | B6 | B7 | B8 |
|---|---|---|---|---|
| Optimum (Index) | 99 | 99 | 99 | 99 |
| FRD [g/L] | 975 | 1090 | 1090 | 1053 |
| FTD [g/L] | 1,14 | 1,14 | 1,14 | 1,14 |
| Härte [Shore A] | 64 | 63 | 62 | 59 |
| Zugfestigkeit [N/mm²] | 19,8 | 20,3 | 18,4 | 15,6 |
| Dehnung[%] | 648 | 602 | 632 | 602 |
| ZF 7d HL [N/mm²] | 24,0 | 22,7 | 23,3 | 20,8 |
| (%initial) | (121) | (112) | (127) | (133) |
| ZF 14d HL | 14,3 | 18,2 | 17,3 | 15,6 |
| [N/mm²] (%initial) | (72) | (90) | (94) | (100) |

## Patentansprüche

1. Verfahren zur Herstellung von Polyurethanformkörpern bei dem man
a) organische Polyisocyanate mit
b) Polyol, enthaltend Polyesterole,
c) gegebenenfalls Treibmitteln,
d) Kettenverlängerungsmitteln und/oder Vernetzungsmitteln,
e) Aminkatalysator,
f) Ionische Flüssigkeit,
g) Carbodiimid der allgemeinen Formel Z-N=C=N-Z, wobei Z einen organischen Rest darstellt und das Stickstoffatom der Carbodiimidgruppe -N=C=N- entweder an ein tertiäres Kohlenstoffatom oder an einen Kohlenstoffatom eines aromatischen Systems gebunden ist, das an den der C-N-Bindung benachbarten Ringpositionen im aromatischen System einen über ein sekundäres oder tertiäres Kohlenstoffatom an das aromatische System gebunden organischen Rest trägt und gegebenenfalls
h) sonstigen Hilfsmitteln und/oder Zusatzstoffen,
zu einer Reaktionsmischung vermischt, in eine Form gibt und zu einem Polyurethanformkörper ausreagieren lässt, wobei das molare Verhältnis von ionischer Flüssigkeit zu Aminkatalysator 0,1 : 1 bis 3,0 : 1 beträgt.

2. Verfahren nach Anspruch 1, **dadurch gekennzeichnet, dass** als Carbodiimid (g) eine Verbindung gemäß der allgemeinen Formel (1) verwendet wird, 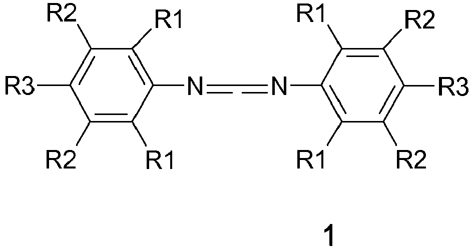 in der R1 eine Isopropyl- oder Isobutylgruppe darstellt und R2 bis R3 ein Wasserstoffatom oder einen organischen Rest darstellt.

3. Verfahren nach Anspruch 1, **dadurch gekennzeichnet, dass** als Carbodiimid (g) eine Verbindung gemäß der allgemeinen Formel (2) verwendet wird, 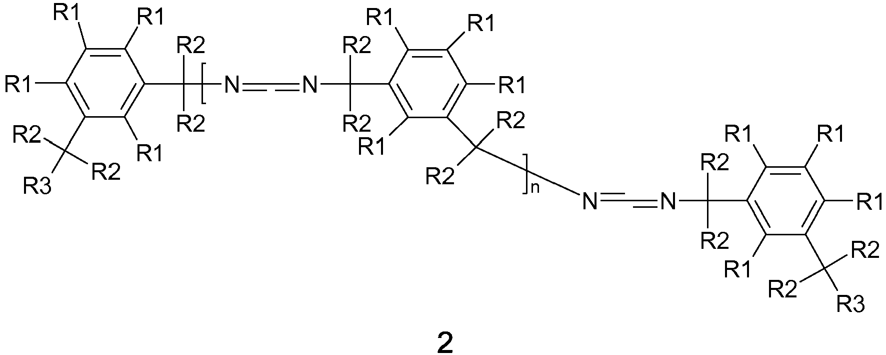
in der R1 gleich oder verschieden ist und einen organischer Rest, bevorzugt ein Wasserstoffatom bedeutet,
R2 gleich oder verschieden ist und einen Alkylrest, bevorzugt eine Methylgruppe bedeutet, und
R3 gleich oder verschieden und ein Wasserstoffatom, ein Alkylrest oder ausgewählt aus der Gruppe der-NCO, -NHCONHR⁴, -NHCONR⁴R⁵ und -NHCOOR⁶-Reste ist, wobei R⁴ und R⁵ gleich oder verschieden sind und einen Alkyl- Cycloalkyl- oder Aralkylrest bedeuten und R⁶ gleich R⁴ oder ein Alkoxypolyoxalkylenrest ist und
n eine ganze Zahl von 0 bis 10 ist.

4. Verfahren nach einem der Ansprüche 1 bis 3, **dadurch gekennzeichnet, dass** das Carbodiimid gegenüber Isocyanaten reaktive Gruppen aufweist.

5. Verfahren nach einem der Ansprüche 1 bis 4, **dadurch gekennzeichnet, dass** das Carbodiimid ein oligomeres Carbodiimid mit 2 bis 10 Carbodiimidgruppen ist.

6. Verfahren nach einem der Ansprüche 1 bis 5, **dadurch gekennzeichnet, dass** das Carbodiimid Polyethergruppen, erhältlich durch Polymerisation von Alkylenoxyd aufweist.

7. Verfahren nach einem der Ansprüche 1 bis 6, **dadurch gekennzeichnet, dass** der Aminkatalysator ausgewählt ist aus der Gruppe, bestehend aus Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, 1,4-Diaza-bicyclo-(2,2,2)-octan, 1,8-Diazabicyclo[5.4.0]undec-7-en (DBU) sowie Mischungen dieser tertiären Amine.

8. Verfahren nach einem der Ansprüche 1 bis 7, **dadurch gekennzeichnet, dass** die ionische Flüssigkeit ausgewählt ist aus der Gruppe, bestehend aus 11-Ethyl-3-methylimidazoliumchlorid, 1- Butyl-3-methylimidazoliumchlorid, 1-Ethyl-3-methylimidazoliummethylsulfonat, 1-Butyl-3-methylimidazoliummethylsulfonat, 1-Ethyl-3-methylimidazoliumethylsulfat, 1- Butyl-3-methylimidazoliummethylsulfat, 1- Ethyl-3-methylimidazoliumdiethylphosphat, 1-Ethyl-3-methylimidazoliumdicyanamid, 1-Ethyl-3-methylimidazoliumacetat, 1-Butyl-3-methylimidazoliumacetat, 1-Ethyl-3-methylimidazoliumthiocyanat, 1-Butyl-3-methylimidazoliumthiocyanat, 1-Ethyl-3-methylimidazoliumtetrafluoroborat, 1-Butyl-3-methylimidazoliumtetrafluoroborat, 1-Ethyl-3-methylimidazoliumtrifluormethansulfonat, 1-Butyl-3-methylimidazoliumtrifluormethansulfonat, 1-Ethyl-3-methylimidazoliumbis(trifluormethansulfonyl)imid, 1-Butyl-3-methylimidazoliumbis(trifluormethansulfonyl)imid, 1-Ethyl-3-methylimidazoliumhexafluorophosphat, 1-Ethyl-3-methylimidazoliumbromid, 1-Ethyl-3-methylimidazolium-*p*-toluolsulfonat sowie, 1- Butyl-3-methylimidazoliumdicyanamid, 1- Butyl-3-methylimidazoliumdimethylphosphat, 1- Butyl-3-methylimidazoliumbromid, 1- Butyl-3-methylimidazolium-*p*-toluolsulfonat, und 1-Butyl-3-methylimidazoliumhexafluorophosphat sowie Mischungen daraus.

9. Verfahren nach einem der Ansprüche 1 bis 8, **dadurch gekennzeichnet, dass** die ionische Flüssigkeit mit 0,3 bis 3,5 Gew.-%, bezogen auf das Gesamtgewicht der Komponenten (b) bis (h), enthalten ist.

10. Verfahren nach einem der Ansprüche 1 bis 9, **dadurch gekennzeichnet, dass** das Polyesterol in Komponente (b) ein Polyester ist, der durch Kondensation von Dicarbonsäuren mit 4 bis 10 C-Atomen mit mindestens einem difunktionellen und/oder trifunktionellen Alkohol erhältlich ist.

11. Polyurethanformkörper, erhältlich nach einem der Ansprüche 1 bis 10.

12. Polyurethanformkörper nach Anspruch 11, **dadurch gekennzeichnet, dass** der Polyurethanformkörper ein Polyurethanintegralschaumstoff mit einer Dichte von 150 bis 850 g/L ist.

13. Polyurethanformkörper nach Anspruch 11, **dadurch gekennzeichnet, dass** der Polyurethanformkörper ein kompaktes Polyurethanelastomer mit einer Dichte von mehr als 850 g/L bis 1400 g/L ist.

14. Verwendung eines Polyurethanformkörpers nach Anspruch 12 als Schuhsohle.

## Claims

1. A process for producing polyurethane moldings,
wherein
a) organic polyisocyanates are mixed with
b) polyol comprising polyesterols,
c) optionally blowing agents,
d) chain extenders and/or crosslinkers,
e) amine catalyst
f) ionic liquid,
g) carbodiimide of the general formula Z-N=C=N-Z, where Z is an organic radical and the nitrogen atom of the carbodiimide group -N=C=N- is bound either to a tertiary carbon atom or to a carbon atom of an aromatic system which on the ring positions adjacent to the C-N bond in the aromatic system bears an organic radical bound via a secondary or tertiary carbon atom to the aromatic system, and optionally
h) other auxiliaries and/or additives,
to form a reaction mixture, the mixture is introduced into a mold and allowed to react to form a polyurethane molding, where the molar ratio of ionic liquid to amine catalyst is from 0.1:1 to 3.0:1.

2. The process according to claim 1, wherein a compound of the general formula (1), 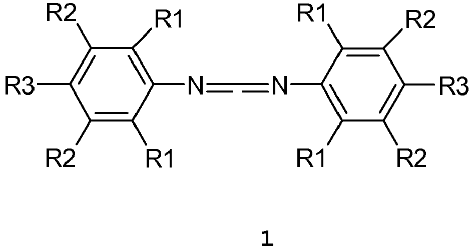 where R1 is an isopropyl or isobutyl group and R2 and R3 are each a hydrogen atom or an organic radical,
is used as carbodiimide (g).

3. The process according to claim 1, wherein a compound of the general formula (2), 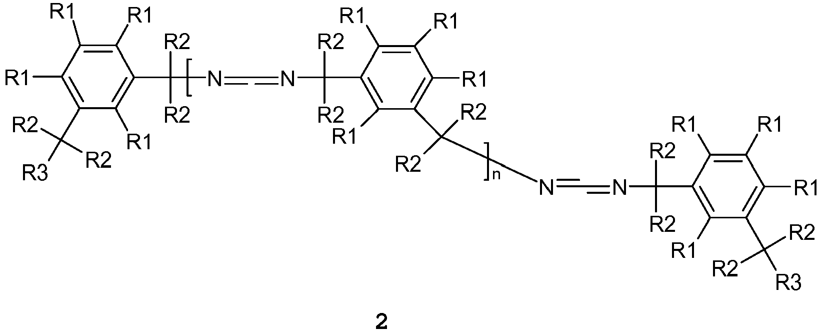
where the radicals R1 are identical or different and are each an organic radical, preferably a hydrogen atom,
the radicals R2 are identical or different and are each an alkyl radical, preferably a methyl group, and
the radicals R3 are identical or different and are each a hydrogen atom, an alkyl radical or are selected from the group consisting of -NCO, -NHCONHR⁴, -NHCONR⁴R⁵ and -NHCOOR⁶ radicals, where R⁴ and R⁵ are identical or different and are each an alkyl, cycloalkyl or aralkyl radical and R⁶ is R⁴ or an alkoxypolyoxalkylene radical and
n is an integer from 0 to 10,
is used as carbodiimide (g).

4. The process according to any of claims 1 to 3, wherein the carbodiimide has groups which are reactive toward isocyanates.

5. The process according to any of claims 1 to 4, wherein the carbodiimide is an oligomeric carbodiimide having from 2 to 10 carbodiimide groups.

6. The process according to any of claims 1 to 5, wherein the carbodiimide has polyether groups obtainable by polymerization of alkylene oxide.

7. The process according to any of claims 1 to 6, wherein the amine catalyst is selected from the group consisting of triethylamine, tributylamine, dimethylbenzylamine, N-methylmorpholine, N-ethylmorpholine, N-cyclohexylmorpholine, N,N,N',N'-tetramethylethylenediamine, N,N,N',N'-tetramethylbutanediamine, N,N,N',N'-tetramethylhexanediamine, pentamethyldiethylenetriamine, bis(dimethylaminoethyl) ether, bis(dimethylaminopropyl)urea, dimethylpiperazine, 1,2-dimethylimidazole, 1-azabicyclo[3.3.0]octane, 1,4-diazabicyclo-[2.2.2]octane, 1,8-diazabicyclo[5.4.0]undec-7-ene (DBU) and mixtures of these tertiary amines.

8. The process according to any of claims 1 to 7, wherein the ionic liquid is selected from the group consisting of 11-ethyl-3-methylimidazolium chloride, 1-butyl-3-methylimidazolium chloride, 1-ethyl-3-methylimidazolium methylsulfonate, 1-butyl-3-methylimidazolium methylsulfonate, 1-ethyl-3-methylimidazolium ethylsulfate, 1-butyl-3-methylimidazolium methylsulfate, 1-ethyl-3-methylimidazolium diethylphosphate, 1-ethyl-3-methylimidazolium dicyanamide, 1-ethyl-3-methylimidazolium acetate, 1-butyl-3-methyl-imidazolium acetate, 1-ethyl-3-methylimidazolium thiocyanate, 1-butyl-3-methylimidazolium thiocyanate, 1-ethyl-3-methylimidazolium tetrafluoroborate, 1-butyl-3-methylimidazolium tetrafluoroborate, 1-ethyl-3-methylimidazolium trifluoromethanesulfonate, 1-butyl-3-methylimidazolium trifluoromethanesulfonate, 1-ethyl-3-methylimidazolium bis(trifluoromethanesulfonyl)imide, 1-butyl-3-methylimidazolium bis(trifluoromethanesulfonyl)imide, 1-ethyl-3-methylimidazoliumhexafluorophosphate, 1-ethyl-3-methylimidazolium bromide, 1-ethyl-3-methylimidazolium *p*-toluenesulfonate and also 1-butyl-3-methylimidazolium dicyanamide, 1-butyl-3-methylimidazolium dimethylphosphate, 1-butyl-3-methylimidazolium bromide, 1-butyl-3-methylimidazolium *p*-toluenesulfonate and 1-butyl-3-methylimidazolium hexafluorophosphate and mixtures thereof.

9. The process according to any of claims 1 to 8, wherein the ionic liquid is comprised in an amount of from 0.3 to 3.5% by weight, based on the total weight of the components (b) to (h).

10. The process according to any of claims 1 to 9, wherein the polyesterol in component (b) is a polyester obtainable by condensation of dicarboxylic acids having from 4 to 10 carbon atoms with at least one bifunctional and/or trifunctional alcohol.

11. A polyurethane molding obtainable according to any of claims 1 to 10.

12. The polyurethane molding according to claim 11, wherein the polyurethane molding is an integral polyurethane foam having a density of from 150 to 850 g/l.

13. The polyurethane molding according to claim 11, wherein the polyurethane molding is a compact polyurethane elastomer having a density of from > 850 g/l to 1400 g/l.

14. The use of a polyurethane molding according to claim 12 as shoe sole.

## Revendications

1. Procédé de fabrication de corps moulés en polyuréthane, selon lequel
a) des polyisocyanates organiques sont mélangés avec
b) un polyol, contenant des polyesterols,
c) éventuellement des agents gonflants,
d) des agents d'allongement de chaînes et/ou des agents de réticulation,
e) un catalyseur aminé,
f) un liquide ionique,
g) un carbodiimide de formule générale Z-N=C=N-Z, dans laquelle Z représente un radical organique et l'atome d'azote du groupe carbodiimide -N=C=N- est relié soit à un atome de carbone tertiaire, soit à un atome de carbone d'un système aromatique, qui porte à la position de cycle voisine de la liaison C-N dans le système aromatique un radical organique relié par un atome de carbone secondaire ou tertiaire au système aromatique, et éventuellement
h) d'autres adjuvants et/ou additifs,
pour former un mélange réactionnel, introduits dans un moule et laissés réagir pour former un corps moulé en polyuréthane, le rapport molaire entre le liquide ionique et le catalyseur aminé étant de 0,1:1 à 3,0:1.

2. Procédé selon la revendication 1, **caractérisé en ce qu'**en tant que carbodiimide (g), un composé selon la formule générale (1) est utilisé 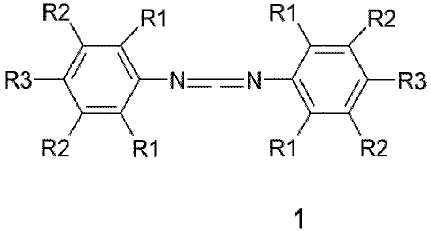 dans laquelle R1 représente un groupe isopropyle ou isobutyle, et R2 à R3 représentent un atome d'hydrogène ou un radical organique.

3. Procédé selon la revendication 1, **caractérisé en ce qu'**en tant que carbodiimide (g), un composé selon la formule générale (2) est utilisé 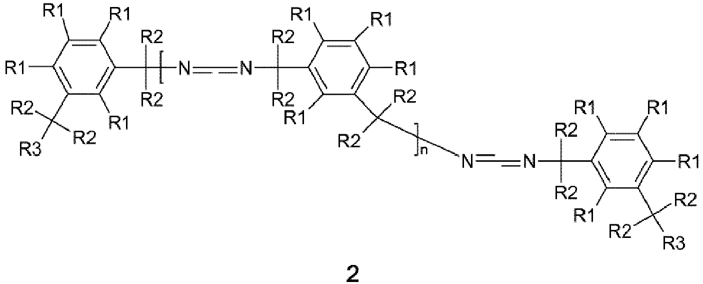
dans laquelle les R1 sont identiques ou différents, et signifient un radical organique, de préférence un atome d'hydrogène,
les R2 sont identiques ou différents, et signifient un radical alkyle, de préférence un groupe méthyle, et
les R3 sont identiques ou différents, et signifient un atome d'hydrogène, un radical alkyle, ou sont choisis dans le groupe constitué par les radicaux -NCO,-NHCONHR⁴, -NHCONR⁴R⁵ et -NHCOOR⁶, R⁴ et R⁵ étant identiques ou différents et signifiant un radical alkyle, cycloalkyle ou aralkyle, et R⁶ étant identique à R⁴ ou étant un radical alcoxypolyoxalkylène, et
n est un nombre entier de 0 à 10.

4. Procédé selon l'une quelconque des revendications 1 à 3, **caractérisé en ce que** le carbodiimide comprend des groupes réactifs avec les isocyanates.

5. Procédé selon l'une quelconque des revendications 1 à 4, **caractérisé en ce que** le carbodiimide est un carbodiimide oligomère contenant 2 à 10 groupes carbodiimide.

6. Procédé selon l'une quelconque des revendications 1 à 5, **caractérisé en ce que** le carbodiimide comprend des groupes polyéther, pouvant être obtenus par polymérisation d'oxyde d'alkylène.

7. Procédé selon l'une quelconque des revendications 1 à 6, **caractérisé en ce que** le catalyseur aminé est choisi dans le groupe constitué par la triéthylamine, la tributylamine, la diméthylbenzylamine, la N-méthyl-, N-éthyl-, N-cyclohexylmorpholine, la N,N,N',N'-tétraméthyléthylène-diamine, la N,N,N',N'-tétraméthylbutane-diamine, la N,N,N',N'-tétraméthylhexane-diamine, la pentaméthyl-diéthylènetriamine, l'éther tétraméthyl-diaminoéthylique, la bis-(diméthyl-aminopropyl)-urée, la diméthylpipérazine, le 1,2-diméthylimidazole, le 1-aza-bicyclo-(3,3,0)-octane, le 1,4-diaza-bicyclo-(2,2,2)-octane, le 1,8-diazabicyclo[5.4.0]undéc-7-ène (DBU), ainsi que les mélanges de ces amines tertiaires.

8. Procédé selon l'une quelconque des revendications 1 à 7, **caractérisé en ce que** le liquide ionique est choisi dans le groupe constitué par le chlorure de 11-éthyl-3-méthylimidazolium, le chlorure de 1-butyl-3-méthylimidazolium, le méthylsulfonate de 1-éthyl-3-méthylimidazolium, le méthylsulfonate de 1-butyl-3-méthylimidazolium, le méthylsulfate de 1-éthyl-3-méthylimidazolium, le méthylsulfate de 1-butyl-3-méthylimidazolium, le diéthylphosphate de 1-éthyl-3-méthylimidazolium, le dicyanamide de 1-éthyl-3-méthylimidazolium, l'acétate de 1-éthyl-3-méthylimidazolium, l'acétate de 1-butyl-3-méthylimidazolium, le thiocyanate de 1-éthyl-3-méthylimidazolium, le thiocyanate de 1-butyl-3-méthylimidazolium, le tétrafluoroborate de 1-éthyl-3-méthylimidazolium, le tétrafluoroborate de 1-butyl-3-méthylimidazolium, le trifluorométhane-sulfonate de 1-éthyl-3-méthylimidazolium, le trifluorométhane-sulfonate de 1-butyl-3-méthylimidazolium, le bis(trifluorométhanesulfonyl)imide de 1-éthyl-3-méthylimidazolium, le bis(trifluorométhanesulfonyl)imide de 1-butyl-3-méthylimidazolium, l'hexafluorophosphate de 1-éthyl-3-méthylimidazolium, le bromure de 1-éthyl-3-méthylimidazolium, le p-toluène-sulfonate de 1-éthyl-3-méthylimidazolium, ainsi que le dicyanamide de 1-butyl-3-méthylimidazolium, le diméthylphosphate de 1-butyl-3-méthylimidazolium, le bromure de 1-butyl-3-méthylimidazolium, le p-toluène-sulfonate de 1-butyl-3-méthylimidazolium et l'hexafluorophosphate de 1-butyl-3-méthylimidazolium, ainsi que leurs mélanges.

9. Procédé selon l'une quelconque des revendications 1 à 8, **caractérisé en ce que** le liquide ionique est contenu à hauteur de 0,3 à 3,5 % en poids, par rapport au poids total des composants (b) à (h).

10. Procédé selon l'une quelconque des revendications 1 à 9, **caractérisé en ce que** le polyesterol dans le composant (b) est un polyester, qui peut être obtenu par condensation d'acides dicarboxyliques de 4 à 10 atomes C avec au moins un alcool bifonctionnel et/ou trifonctionnel.

11. Corps moulé en polyuréthane, pouvant être obtenu selon l'une quelconque des revendications 1 à 10.

12. Corps moulé en polyuréthane selon la revendication 11, **caractérisé en ce que** le corps moulé en polyuréthane est une mousse intégrale en polyuréthane ayant une densité de 150 à 850 g/l.

13. Corps moulé en polyuréthane selon la revendication 11, **caractérisé en ce que** le corps moulé en polyuréthane est un élastomère de polyuréthane compact ayant une densité de plus de 850 g/l à 1 400 g/l.

14. Utilisation d'un corps moulé en polyuréthane selon la revendication 12 en tant que semelle de chaussure.
